# EUROPÄISCHE PATENTSCHRIFT

(11) **EP 2 960 987 B1**
(45) Veröffentlichungstag und Bekanntmachung des Hinweises auf die Patenterteilung: **02.01.2019**
(21) Anmeldenummer: 15001850.5
(22) Anmeldetag: 23.06.2015
(51) Int. Cl.: H01Q 1/42, H01Q 1/28

(54) **VERFAHREN ZUM HERSTELLEN EINES RADOMS**
METHOD FOR PRODUCING A RADOME
PROCEDE DESTINE A LA FABRICATION D'UN RADOME

(30) Priorität: 25.06.2014 DE 102014108896
(43) Veröffentlichungstag der Anmeldung: 30.12.2015
(73) Patentinhaber: Airbus Defence and Space GmbH, 85521 Ottobrunn (DE)
(72) Erfinder: Schönlinner, Bernhard, 81547 München (DE); Prechtel, Ulrich, 81739 München (DE); Schuster, Thomas, 89278 Nersingen (DE); Sabielny, Michael, 89077 Ulm (DE); Zippold, Herbert, 83052 Bruckmühl (DE); Dittrich, Kay W., 85051 Ingolstadt (DE); Körwien, Thomas, 85635 Höhenkirchen (DE); Stadler, Franz, 85113 Böhmfeld (DE); Rothenhäusler, Markus, 85276 Pfaffenhofen (DE); Wulbrand, Wilhelm, 88677 Markdorf (DE)
(74) Vertreter: LKGLOBAL Lorenz & Kopf PartG mbB Patentanwälte

(56) Entgegenhaltungen:
- EP-A1- 2 383 364
- DE-A1- 3 920 110
- DE-T2- 69 614 690

## Beschreibung

### Technisches Gebiet

Die Erfindung betrifft ein Verfahren zum Herstellen eines Radoms.

### Hintergrund der Erfindung

Ein Radom kann als elektromagnetisches Fenster oder Radarkuppel bezeichnet werden und wird üblicherweise an Fahrzeugen oder im stationären Betrieb verwendet, um beispielsweise Antennen vor äußeren Einflüssen, insbesondere Umwelteinflüssen, zu schützen. Dabei ist eine Anforderung an ein Radom, dass es elektromagnetisch durchlässig ist, um elektromagnetische Wellen, welche von der Antenne ausgesandt werden oder von dieser empfangen werden sollen, durch zu lassen.

Bei gegen Radardetektion getarnten fliegenden Plattformen kann insbesondere der Abschnitt der Plattform, welcher sich hinter einem Radom befindet, Quelle von Rückstrahlung zu einem Radar sein.

Die Radartarnung von fliegenden Plattformen wird unter anderem durch eine Formgebung einer elektrisch leitenden Außenhaut der Plattformen erreicht, so dass eine Rückstrahlung elektromagnetischer Wellen von dieser Außenhaut zu einem Radar beeinflusst wird. Solche Plattformen können als Plattformen mit verringerter Radarsignatur bezeichnet werden. Ein neuralgischer Punkt hoher Rückstrahlung kann insbesondere in den Antennen der Radar- und Kommunikationssysteme fliegender Plattformen liegen, sofern ein Radom der Antennenaperturen unter aerodynamischen Gesichtspunkten und nicht unter Tarnaspekten gestaltet wird. Da ein Radom üblicherweise elektromagnetisch durchlässig gestaltet ist, um eine Signalübertragung von und zu den Radar- und Kommunikationssystemen zu erlauben, ist ein Radom auch für Radar-Signale eines detektierenden Radars durchlässig. Stark rückstreuende Antennenaperturen können somit eine Tarnung der fliegenden Plattform schwächen bzw. unzulässig beeinträchtigen.

Bekannte Radome können eine frequenzselektive Schicht aufweisen, welche Signale der eigenen Radar- und Kommunikationssysteme durchlassen und Signale anderer Frequenzen in eine gewünschte Richtung reflektieren bzw. nicht durchlassen. Der Nachteil dieser Lösung ist, dass eine Tarnwirkung für die Arbeitsfrequenz der eigenen Radar- und Kommunikationssysteme nicht gegeben ist.

Ein breitbandiger Lösungsansatz ist ein Radom, welches in einem ersten Zustand für sämtliche Frequenzen durchlässig und in einem zweiten Zustand für sämtliche Frequenzen nicht durchlässig bzw. reflektierend ist.

Ein Beispiel eines solchen breitbandig für elektromagnetische Wellen wahlweise durchlässigen oder reflektierenden Radoms ist ein Radom mit einer fotosensitiven Schicht, wie in DE 39 20 110 A1 beschrieben. Die fotosensitive Schicht besteht aus einem Halbleiter-Photowiderstand. Bei diesem Material bewirken einfallende Photonen eine Freigabe von Ladungsträgern im Material des Halbleiters. Die Leitfähigkeit des Halbleiters ist damit abhängig von einer einfallenden Beleuchtungsstärke und ist reversibel änderbar, wodurch sich die Durchlässigkeit des Halbleiters und somit des Radoms für elektromagnetische Wellen steuern lässt. In einem ladungsträgerarmen Zustand (unbeleuchtet) ist die Schicht elektromagnetisch durchlässig, wohingegen sie in einem Zustand mit gelösten bzw. freigegebenen Ladungsträgern (beleuchtet) elektromagnetisch nicht durchlässig ist. Zwischen dem unbeleuchteten und dem beleuchteten Zustand kann sich die Leitfähigkeit der Halbleiterelemente um mehrere Zehnerpotenzen ändern, beispielsweise um bis zu 4 bis 5 Zehnerpotenzen.

Auf Grund der plattformspezifischen Formgebung eines Radoms, den physikalischen Eigenschaften verwendbarer Radomwerkstoffe und den Anforderungen an die fotosensitive Beschichtung, stellt es eine technische Herausforderung dar, ein Radom mit einer geeigneten fotosensitiven Halbleiterbeschichtung zu versehen.

### Zusammenfassung der Erfindung

Es kann als Aufgabe der vorliegenden Erfindung betrachtet werden, ein Verfahren anzugeben, welches eine vereinfachte Herstellung eines breitbandig wahlweise elektromagnetisch durchlässigen oder reflektierenden Radoms ermöglicht.

Diese Aufgabe wird gelöst mit dem Gegenstand des unabhängigen Anspruchs.

Weiterbildungen der Erfindung ergeben sich aus den abhängigen Ansprüchen und aus der folgenden Beschreibung.

Gemäß einem Aspekt ist ein Verfahren zum Herstellen eines Radoms angegeben. Das Verfahren weist die folgenden Schritte auf: Erstellen einer Passform zumindest eines Abschnittes einer Innenfläche einer Wand des Radoms in einem ersten Schritt; Anordnen einer Mehrzahl flächiger fotosensitiver Halbleiterelemente auf einer Außenfläche der Passform in einem zweiten Schritt; Platzieren der Passform mit der Mehrzahl flächiger fotosensitiver Halbleiterelemente an dem zumindest einen Abschnitt der Innenfläche der Wand in einem dritten Schritt; Herstellen einer Verbindung zwischen der Mehrzahl flächiger fotosensitiver Halbleiterelemente und der Wand in einem vierten Schritt; Entfernen der Passform aus dem Radom in einem fünften Schritt.

Dieses Verfahren ermöglicht ein einfaches Herstellen eines Radoms mit einer Schicht aufweisend mehrere Halbleiterelemente zum elektromagnetischen Abschirmen des Innenraums des Radoms.

Die Passform kann insbesondere aus einem sich verfestigenden Material hergestellt werden, indem ein Negativ-Abdruck der Innenfläche der Wand des Radoms erstellt wird. In dem verfestigten Zustand der Passform ist diese starr oder im Wesentlichen starr. Der Negativ-Abdruck kann von der gesamten Innenfläche der Wand hergestellt werden. Die Passform kann alternativ aus Kunststoff geformt werden.

Die Passform kann alternativ zur Herstellung eines Negativs von einem Radom auch als Nachbildung basierend auf Konstruktionsplänen des Radoms gefertigt werden.

Bei den flächigen fotosensitiven Halbleiterelementen kann es sich insbesondere um ebene Elemente handeln, d.h. dass diese Elemente keine Krümmung, insbesondere keine räumliche Krümmung aufweisen und beispielsweise als Polyeder bzw. Körper ausgeführt sind, die mindestens zwei ebene gegenüberliegende Flächen aufweisen. In einer alternativen Ausführungsform können die Halbleiterelemente auch als nichtebene Elemente ausgeführt sein.

Die Halbleiterelemente können insbesondere aus Silizium gefertigt sein, beispielsweise aus nicht dotiertem oder niedrig dotiertem, hochohmigem Silizium. Vorzugsweise handelt es sich bei den Halbleiterelementen um einkristalline Halbleiter. Die Halbleiterelemente können Siliziumkacheln sein, welche eine Materialdicke zwischen 200 µm und 300 µm haben.

Zumindest eine Grundfläche der flächigen fotosensitiven Halbleiterelemente kann als regelmäßiges oder unregelmäßiges Polygon bzw. Vieleck ausgeführt sein. Jedes Polygon kann Kanten mit gleicher oder voneinander abweichender Kantenlänge aufweisen. Ebenso können die Öffnungswinkel der Ecken voneinander abweichen oder gleich sein. Jede Kantenlänge eines Polygons kann variieren von wenigen Millimetern, mm, beispielsweise zwischen 1 bis 3 mm, bis zu wenigen oder vielen Zentimetern, cm, beispielsweise 5 bis 10 cm.

Zumindest ein Abschnitt der Oberfläche der Halbleiterelemente kann ein thermisches Siliziumoxid aufweisen. Durch das Siliziumoxid kann dieser Abschnitt der Oberfläche entspiegelt werden. Durch Bestrahlung eines solchen Halbleiterelementes mit optischer Energie, beispielsweise in Form von Licht im sichtbaren Bereich oder im Infrarotbereich, wird eine hohe elektrische Leitfähigkeit des Halbleiterelements erreicht.

Die flächigen Halbleiterelemente können insbesondere aus vorgefertigten Halbleiterscheiben oder Halbleiterschalen (wie z.B. Silizium-Wafern) hergestellt werden, beispielsweise indem geeignete Trennverfahren verwendet werden, um einen Teil einer solchen Halbleiterscheibe so abzutrennen, dass daraus ein flächiges fotosensitives Halbleiterelement gefertigt wird. Die Halbleiterscheiben können auf Grund ihrer Größe nur bedingt auf gekrümmten Flächen angebracht werden, sofern der maximale Abstand zwischen der Halbleiterscheibe und der gekrümmten Fläche einen vorgebbaren Wert nicht überschreiten darf. Daher werden diese Halbleiterscheiben in kleinere Stücke geschnitten, so dass durch Aneinanderreihung einer Mehrzahl solcher kleinerer Stücke eine gekrümmte Innenfläche einer Radomwand angenähert mit solchen Stücken bedeckt werden kann.

Das Verfahren wie oben und im Folgenden beschrieben ist grundsätzlich für Radome beliebiger geometrischer Ausmaße geeignet.

Die Passform wird mit den auf ihrer Außenfläche angeordneten flächigen fotosensitiven Halbleiterelementen so an die Wand des Radoms herangeführt, dass sich die Halbleiterelemente zwischen der Passform und der Wand befinden. In diesem Zustand können die Ecken oder Kanten der Halbleiterelemente an der Innenfläche der Wand anliegen, können von dieser aber auch beabstandet sein.

Die Mehrzahl flächiger fotosensitiver Halbleiterelement wird insbesondere mittels einer mechanischen Verbindung, beispielsweise einer Klebe- oder Haftverbindung mit der Wand, insbesondere der Innenfläche der Wand, verbunden.

Anschließend wird die Passform aus dem Innenraum der Wand entfernt. Dieser Schritt erfolgt insbesondere erst dann, wenn die Klebe- oder Haftverbindung zwischen den Halbleiterelementen und der Innenfläche der Wand ausgehärtet bzw. hinreichend lasttragefähig ist, um die Halbleiterelemente in ihrer Position zu fixieren.

Gemäß einer Ausführungsform wird vor dem Anordnen der Mehrzahl flächiger fotosensitiver Halbleiterelemente auf der Außenfläche der Passform eine Innengeometrie der Wand des Radoms erfasst und in ebene Teilbereiche unterteilt und die Mehrzahl flächiger fotosensitiver Halbleiterelemente wird gemäß der Form der ebenen Teilbereiche bereitgestellt.

Unter der Innengeometrie der Wand des Radoms ist insbesondere eine räumliche Krümmung des zumindest einen Abschnittes der Innenfläche der Wand des Radoms zu verstehen. Ein ebener Teilbereich weist keine räumliche Krümmung auf.

In anderen Worten wird also der Verlauf einer räumlich gekrümmten Wand des Radoms durch ebene Teilbereiche angenähert abgebildet. Indem die Passform mit den Halbleiterelementen bestückt und an die Innenfläche der Wand geführt wird, kann die Mehrzahl von Halbleiterelementen in guter Näherung an die Innenfläche der Wand angebracht werden, insbesondere wenn die Innenfläche der Wand für eine Person oder für einen Fertigungsroboter nur schwer oder unter hohem zeitlichem Aufwand zugänglich ist, um die Halbleiterelemente einzeln anzuordnen.

Das Anbringen der Halbleiterelemente auf der Passform ermöglicht dazu eine möglichst genaue Anordnung der Halbleiterelemente nebeneinander, so dass die Abstände zwischen benachbarten Halbleiterelementen einen vorgebbaren Abstand aufweisen.

Gemäß einer weiteren Ausführungsform wird vor dem Anordnen der Mehrzahl flächiger fotosensitiver Halbleiterelemente auf der Außenfläche der Passform die Außenfläche der Passform mit einer zumindest einseitig haftenden Schicht versehen, um die Mehrzahl flächiger fotosensitiver Halbleiterelemente an einer haftenden Fläche der Schicht zu fixieren.

Die einseitig haftende Schicht kann beispielsweise eine Klebefolie sein, welche zumindest auf einer Außenseite ein haftendes Material aufweist. Die Außenseite der Schicht ist dabei diejenige Oberfläche, welche von der Außenfläche der Passform abgewandt und der Innenfläche der Wand zugewandt ist. Damit haften die flächigen fotosensitiven Halbleiterelemente an der Außenfläche der Schicht und können so in der hierdurch definierten Position an die Innenfläche der Wand gebracht werden.

Alternativ kann die einseitig haftende Schicht auch eine Beschichtung der Passform sein. Bei dieser Beschichtung kann es sich um eine Klebe- oder Haftmasse handeln, welche in späteren Verfahrensschritten gelöst werden kann, so dass die Verbindung zwischen den Halbleiterelementen und der Passform gelöst wird.

Gemäß einer weiteren Ausführungsform wird die Schicht reversibel mit der Passform gekoppelt. Dies bedeutet, dass entweder die Klebefolie von der Passform gelöst werden kann, oder dass eine Klebebeschichtung der Passform aufgelöst werden kann, um die Passform zu entnehmen, nachdem die Halbleiterelemente in Position gebracht wurden, d.h. an der Innenfläche der Wand befestigt wurden.

Gemäß einer weiteren Ausführungsform wird die Schicht durch einen Unterdruck relativ zu der Passform fixiert.

Der Unterdruck ist ein reduzierter Gasdruck mit Bezug zu dem die Passform umgebenen Atmosphärendruck. Damit wird die Klebeschicht, beispielsweise in Form einer Klebefolie, durch die Atmosphäre an die Außenfläche der Passform gedrückt. Die Schicht wird damit insbesondere relativ zu der Außenfläche der Passform fixiert.

Gemäß einer weiteren Ausführungsform wird vor dem Entfernen der Passform aus dem Radom die Verbindung zwischen der Schicht und der Passform gelöst.

Somit wird die Position der Halbleiterelemente mit Bezug zu der Innenfläche der Wand bei dem Herausnehmen der Passform nicht mehr verändert.

Gemäß einer weiteren Ausführungsform beinhaltet das Lösen der Verbindung zwischen der Schicht und der Passform den Abbau des Unterdrucks.

Somit wird die Klebefolie nicht mehr an die Außenfläche der Passform gedrückt und die Passform kann von der Klebefolie entfernt werden. Für den Fall, dass als Schicht zum Befestigen der Halbleiterelemente auf der Passform eine Klebefolie verwendet wird, können zumindest Teile der Klebefolie nach dem Entfernen der Passform an der Wand verbleiben.

Gemäß einer weiteren Ausführungsform beinhaltet das Lösen der Verbindung zwischen der Schicht und der Passform das Applizieren eines Lösungsmittels.

Ein Lösungsmittel kann insbesondere eine Haft- oder Klebekraft reduzieren oder eliminieren, so dass die Passform entfernt werden kann, ohne dass eine Kraft auf die Wand oder die Halbleiterelemente ausgeübt wird.

Gemäß einer weiteren Ausführungsform beinhaltet das Lösen der Verbindung zwischen der Schicht und der Passform das Erhöhen einer Temperatur der Schicht.

Eine erhöhte Temperatur kann die Lösbarkeit einer Klebeverbindung vereinfachen. Insbesondere kann diese erhöhte Temperatur zum Einsatz kommen, wenn die Schicht einen Kleber aufweist, welcher bei erhöhter Temperatur lösbar ist.

Gemäß einer weiteren Ausführungsform weist das Herstellen der Verbindung zwischen der Mehrzahl flächiger fotosensitiver Halbleiterelemente und dem Radom den Schritt auf: Einbringen einer Haftmasse in einen Zwischenraum zwischen der Außenfläche der Passform und der Innenfläche der Wand.

Diese Haftmasse fixiert die Halbleiterelemente mit Bezug zu der Wand, insbesondere mit Bezug zu der Innenfläche der Wand. Bei der Haftmasse kann es sich beispielsweise um einen Silikonkleber handeln.

Gemäß einem weiteren Aspekt ist ein Radom angegeben, welches eine Wand und eine Mehrzahl von flächigen fotosensitiven Halbleiterelementen aufweist. Die flächigen fotosensitiven Halbleiterelemente sind an einer Innenfläche der Wand angeordnet. Jedes der Halbleiterelemente ist eben und mittels einer Klebemasse mit der Innenfläche gekoppelt.

Bei dem Radom gemäß diesem Aspekt handelt es sich um ein Radom, welches mit dem oben beschriebenen Verfahren hergestellt wurde. Insofern gilt die Beschreibung des Verfahrens sinngemäß auch für ein solches Radom. Strukturelle Merkmale des Radoms wurden bereits mit Bezug zu dem Verfahren beschrieben und gelten für das Radom sinngemäß.

Gemäß einer Ausführungsform bedecken die flächigen fotosensitiven Halbleiterelemente die gesamte Innenfläche der Wand.

Da die Halbleiterelemente voneinander getrennte, ebene Elemente sind, werden bei Ihrer Anordnung auf der Innenfläche der Wand geringe vorgebbare Abstände zwischen benachbarten Halbleiterelementen eingehalten. In dieser Ausführungsform wird die Innenfläche also im Wesentlichen in ihrer Gesamtheit durch benachbarte einzelne Halbleiterelemente abgedeckt.

Eine Alternative zu der kompletten Auskleidung der Innenfläche der Wand mit fotosensitiven Halbleiterelementen ist die Auskleidung der Wand mit einer frequenzselektiven Schicht und die Anbringung von fotosensitiven Elementen auf der frequenzselektiven Schicht, wobei nur eine teilweise Auskleidung der Innenfläche der Wand mit fotosensitiven Halbleiterelementen erforderlich ist, so dass durch die fotosensitiven Halbleiterelemente die elektromagnetischen Eigenschaften der frequenzselektiven Schicht verändert werden können.

Hierzu kann eine fotosensitive Substanz auf Aperturen einer metallischen Folie (frequenzselektive Schicht) oder metallischer Pfade angeordnet sein, wobei die metallische Folie bzw. die metallischen Pfade bzw. Leiterbahnen sich auf der Innenfläche der Wand befinden.

Gemäß einer weiteren Ausführungsform handelt es sich bei den Halbleiterelementen um nicht dotiertes Silizium.

### Kurze Beschreibung der Figuren

Nachfolgend wird anhand der beigefügten Zeichnungen näher auf Ausführungsbeispiele der Erfindung eingegangen. Es zeigen:
**Fig. 1** eine schematische Darstellung eines Schrittes des Verfahrens gemäß einem Ausführungsbeispiel.
**Fig. 2** eine schematische Darstellung eines Schrittes des Verfahrens gemäß einem Ausführungsbeispiel.
**Fig. 3** eine schematische Darstellung eines Schrittes des Verfahrens gemäß einem Ausführungsbeispiel.
**Fig. 4** eine schematische Darstellung eines Schrittes des Verfahrens gemäß einem Ausführungsbeispiel.
**Fig. 5** eine schematische Darstellung eines Schrittes des Verfahrens gemäß einem Ausführungsbeispiel.
**Fig. 6** eine schematische Darstellung eines Schrittes des Verfahrens gemäß einem Ausführungsbeispiel.
**Fig. 7** eine schematische Darstellung eines Radoms gemäß einem Ausführungsbeispiel.
**Fig. 8** eine schematische Darstellung einer Passform zum Herstellen eines Radoms gemäß einem Ausführungsbeispiel.

### Detaillierte Beschreibung von Ausführungsbeispielen

Die Darstellungen in den Figuren sind schematisch und nicht maßstabsgetreu. Werden in der nachfolgenden Figurenbeschreibung gleiche Bezugszeichen verwendet, betreffen diese gleiche oder ähnliche Elemente. Bei dem Radom und bei der Passform handelt es sich um dreidimensionale Objekte, welche in den nachfolgenden Figuren der Einfachheit halber im Querschnitt dargestellt sind.

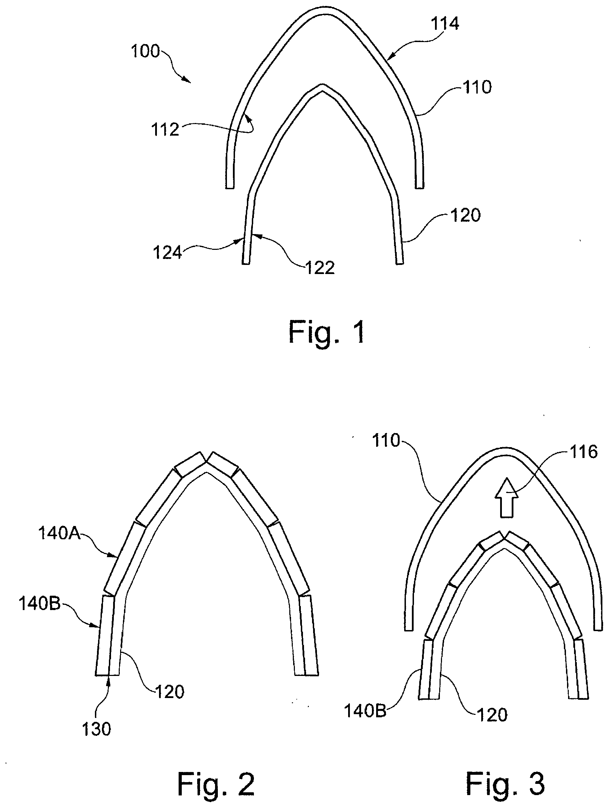

Ein Radom 100 wie in den Figuren 1 bis 7 gezeigt hat einen im Wesentlichen oder in grober Näherung U- oder V-förmigen Querschnitt und die Wand 110 verläuft so, dass sie einen Innenraum 160 umgibt, in welchem die zu schützenden Antennen angeordnet sind, wenn das Radom an einer Plattform befestigt ist.

Der Innenraum ist zumindest einseitig geöffnet bzw. zugänglich, um das Radom mit der Plattform verbinden und die zu schützenden Antennen aufnehmen zu können.

Fig. 1 zeigt schematisch einen Schritt des Herstellens einer Passform 120 mit einer Innenfläche 122 und einer Außenfläche 124. Die Außenfläche 124 der Passform 120 entspricht im Wesentlichen der Innenfläche 112 der Wand 110 des Radoms. Die Wand 110 hat eine Außenfläche 114.

Die Passform 120 ist so ausgeführt, dass sie geringfügig kleiner ist als der Innenraum der Wand 110, so dass es möglich ist, die Halbleiterelemente zusammen mit der Plattform in den Innenraum einzuführen.

Fig. 2 zeigt die Passform 120, auf deren Außenfläche 124 eine Mehrzahl von flächigen Halbleiterelementen 140A, 140B angeordnet ist. Auf der Außenfläche 124 der Passform 120 ist eine Klebeschicht 130 angeordnet, welche die Halbleiterelemente 140A, 140B mit Bezug zu der Passform fixiert.

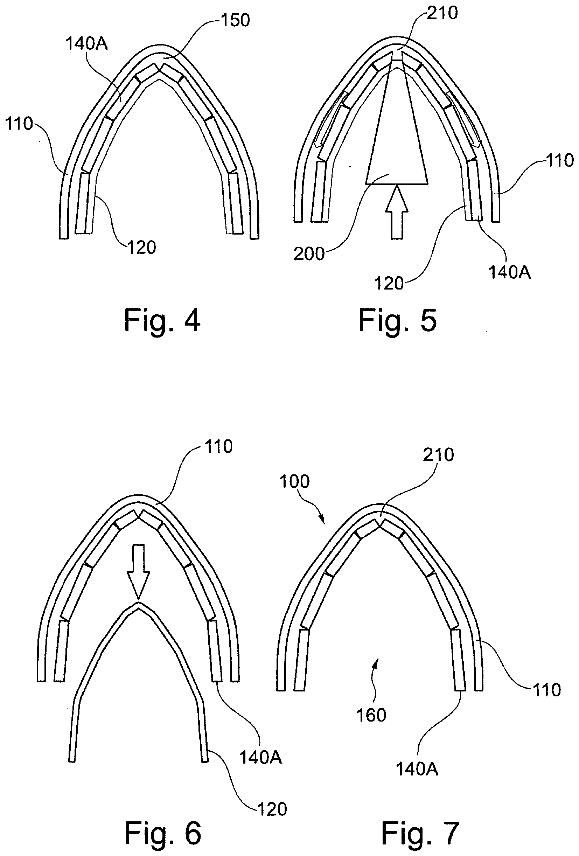

Fig. 3 stellt dar, wie die mit Halbleiterelementen 140B bestückte Passform 120 in den Innenraum der Wand 110 eingeführt wird. Dabei erfolgt eine Bewegung in Richtung des Pfeils 116, bis die Passform 120 an der Innenfläche 122 der Wand 110 anliegt, wie in Fig. 4 gezeigt.

In dem in Fig. 4 gezeigten Zustand weisen die Halbleiterelemente 140A einen minimalen Abstand zu der Wand auf bzw. liegen zumindest abschnittsweise an dieser an, in dieser Ausführungsform an ihren Ecken. Da die Halbleiterelemente ebene, flächige Elemente sind, entsteht zumindest abschnittsweise ein Zwischenraum 150 durch die Krümmung der Wand 110.

In diesem Zwischenraum 150 wird eine Klebemasse 210 mittels einer Klebevorrichtung 200 eingeführt, um die Halbleiterelemente 140A mit Bezug zu der Wand 110 zu fixieren.

Die Klebemasse kann durch einen Durchbruch in der Passform und zwischen zwei benachbarten Halbleiterelementen in den Zwischenraum eingeführt bzw. eingespritzt werden, wie in Fig. 5 gezeigt. Die so eingeführte Klebemasse breitet sich in dem Zwischenraum aus und fixiert die Halbleiterelemente mit Bezug zu der Wand.

Im Anschluss an diesen Schritt bzw. nach Aushärten der Klebemasse 210 wird die Klebekraft der Klebeschicht 130 gelöst, um die Passform entfernen zu können, ohne eine Kraft, welche einen vorgebbaren Schwellwert übersteigt, auf die Halbleiterelemente oder die Wand auszuüben, siehe Fig. 6.

Im Ergebnis bleibt das Radom 100, an dessen Wand 110 einzelne, flächige, ebene Halbleiterelemente 140A angeordnet sind, um eine elektromagnetische Durchlässigkeit oder Undurchlässigkeit herbeiführen zu können.

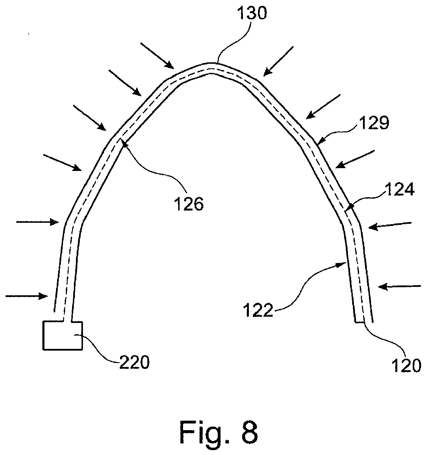

Fig. 8 zeigt eine Passform 120 zum Fixieren einer Klebeschicht 130 mittels Unterdruck mit Bezug zu der Außenfläche 124 der Passform 120.

Die Außenfläche 124 der Passform 120 weist eine Mehrzahl von Durchbrüchen 126 auf. Zwischen der Außenfläche 124 und der Innenfläche 122 ist ein Zwischenraum, welcher mit einem Unterdruck beaufschlagt werden kann, beispielsweise indem ein Vakuum- oder Unterdruckgenerator 220 mit diesem Zwischenraum gekoppelt wird und ein Gas, z.B. Luft, absaugt. Wird die Klebeschicht 130 auf die Außenfläche 124 gelegt, wird diese durch die Druckdifferenz zwischen dem Zwischenraum und der Umgebung in Richtung der Pfeile 129 auf die Außenfläche 124 der Passform gedrückt und fixiert, so dass die Klebeschicht 130 sich weder von der Außenfläche 124 lösen, noch sich mit Bezug zu der Außenfläche 124 bewegen kann.

Die Außenfläche der Klebeschicht 130 ist haftend, wohingegen die Innenfläche der Klebeschicht 130 nicht haftend ausgeführt ist. Damit können die Halbleiterelemente auf die Klebeschicht 130 geklebt werden, wohingegen die Passform reversibel mit der Schicht 130 gekoppelt ist und diese Kopplung durch Abbau des Unterdrucks jederzeit gelöst werden kann, um die Passform aus dem Radom zu entfernen.

## Patentansprüche

1. Verfahren zum Herstellen eines Radoms (100), aufweisend die Schritte:
Erstellen einer Passform (120) zumindest eines Abschnittes einer Innenfläche (112) einer Wand (110) des Radoms (100);
Anordnen einer Mehrzahl flächiger fotosensitiver Halbleiterelemente (140A, 140B) auf einer Außenfläche (124) der Passform (120);
Platzieren der Passform (120) mit der Mehrzahl flächiger fotosensitiver Halbleiterelemente (140A, 140B) an dem zumindest einen Abschnitt der Innenfläche (112) der Wand (110);
Herstellen einer Verbindung zwischen der Mehrzahl flächiger fotosensitiver Halbleiterelemente (140A, 140B) und der Wand (110);
Entfernen der Passform (120) aus dem Radom (100).

2. Verfahren nach Anspruch 1,
wobei vor dem Anordnen der Mehrzahl flächiger fotosensitiver Halbleiterelemente (140A, 140B) auf der Außenfläche (124) der Passform (120) eine Innengeometrie der Wand (110) des Radoms (100) erfasst und in ebene Teilbereiche unterteilt wird und die Mehrzahl flächiger fotosensitiver Halbleiterelemente (140A, 140B) gemäß der Form der ebenen Teilbereiche bereitgestellt wird.

3. Verfahren nach einem der vorhergehenden Ansprüche,
wobei vor dem Anordnen der Mehrzahl flächiger fotosensitiver Halbleiterelemente (140A, 140B) auf der Außenfläche (124) der Passform (120) die Außenfläche (124) der Passform (120) mit einer zumindest einseitig haftenden Schicht (130) versehen wird, um die Mehrzahl flächiger fotosensitiver Halbleiterelemente (140A, 140B) an einer haftenden Fläche der Schicht (130) zu fixieren.

4. Verfahren nach Anspruch 3,
wobei die Schicht (130) reversibel mit der Passform gekoppelt wird.

5. Verfahren nach Anspruch 3 oder 4,
wobei die Schicht (130) durch einen Unterdruck relativ zu der Passform (120) fixiert wird.

6. Verfahren nach einem der Ansprüche 3 bis 5,
wobei vor dem Entfernen der Passform (120) aus dem Radom (100) die Verbindung zwischen der Schicht (130) und der Passform (120) gelöst wird.

7. Verfahren nach einem der Ansprüche 3 bis 6,
wobei das Lösen der Verbindung zwischen der Schicht (130) und der Passform (120) den Abbau des Unterdrucks beinhaltet.

8. Verfahren nach einem der Ansprüche 3 bis 7,
wobei das Lösen der Verbindung zwischen der Schicht (130) und der Passform (120) das Applizieren eines Lösungsmittels beinhaltet.

9. Verfahren nach einem der Ansprüche 3 bis 8,
wobei das Lösen der Verbindung zwischen der Schicht (130) und der Passform (120) das Erhöhen einer Temperatur der Schicht (130) beinhaltet.

10. Verfahren nach einem der vorhergehenden Ansprüche,
wobei das Herstellen der Verbindung zwischen der Mehrzahl flächiger fotosensitiver Halbleiterelemente (140A, 140B) und dem Radom den Schritt aufweist:
Einbringen einer Haftmasse (210) in einen Zwischenraum (150) zwischen der Außenfläche (124) der Passform (120) und der Innenfläche (112) der Wand (110).

## Claims

1. Method for producing a radome (100), comprising the steps of:
creating a fitting shape (120) of at least one portion of an inner surface (112) of a wall (110) of the radome (100);
arranging a plurality of sheet-like photosensitive semiconductor elements (140A, 140B) on an outer surface (124) of the fitting shape (120);
placing the fitting shape (120) with the plurality of sheet-like photosensitive semiconductor elements (140A, 140B) on the at least one portion of the inner surface (112) of the wall (110);
establishing a connection between the plurality of sheet-like photosensitive semiconductor elements (140A, 140B) and the wall (110);
removing the fitting shape (120) from the radome (100).

2. Method according to Claim 1,
wherein, before the act of arranging the plurality of sheet-like photosensitive semiconductor elements (140A, 140B) on the outer surface (124) of the fitting shape (120), an inner geometry of the wall (110) of the radome (100) is detected and is divided into planar subregions and the plurality of sheet-like photosensitive semiconductor elements (140A, 140B) are provided according to the form of the planar subregions.

3. Method according to one of the preceding claims,
wherein, before the act of arranging the plurality of sheet-like photosensitive semiconductor elements (140A, 140B) on the outer surface (124) of the fitting shape (120), the outer surface (124) of the fitting shape (120) is provided with a layer (130) that is adhesive on at least one side, in order to fix the plurality of sheet-like photosensitive semiconductor elements (140A, 140B) on an adhesive surface of the layer (130).

4. Method according to Claim 3,
wherein the layer (130) is reversibly coupled to the fitting shape.

5. Method according to Claim 3 or 4,
wherein the layer (130) is fixed relative to the fitting shape (120) by a negative pressure.

6. Method according to one of Claims 3 to 5,
wherein, before the act of removing the fitting shape (120) from the radome (100), the connection between the layer (130) and the fitting shape (120) is broken.

7. Method according to one of Claims 3 to 6,
wherein the act of breaking the connection between the layer (130) and the fitting shape (120) involves reducing the negative pressure.

8. Method according to one of Claims 3 to 7,
wherein the act of breaking the connection between the layer (130) and the fitting shape (120) involves applying a solvent.

9. Method according to one of Claims 3 to 8,
wherein the act of breaking the connection between the layer (130) and the fitting shape (120) involves increasing a temperature of the layer (130).

10. Method according to one of the preceding claims,
wherein the act of establishing the connection between the plurality of sheet-like photosensitive semiconductor elements (140A, 140B) and the radome comprises the step of:
introducing an adhesive compound (210) into an intermediate space (150) between the outer surface (124) of the fitting shape (120) and the inner surface (112) of the wall (110).

## Revendications

1. Procédé pour produire un radôme (100), comprenant les étapes consistant à :
réaliser un moule d'adaptation (120) d'au moins une partie d'une surface interne (112) d'une paroi (110) du radôme (100) ;
disposer une pluralité d'éléments à semi-conducteurs photosensibles plans (140A, 140B) sur une surface externe (124) du moule d'adaptation (120) ;
placer le moule d'adaptation (120) avec la pluralité d'éléments à semi-conducteurs photosensibles plans (140A, 140B) sur l'au moins une partie de la surface interne (112) de la paroi (110) ;
réaliser une liaison entre la pluralité d'éléments à semi-conducteurs photosensibles plans (140A, 140B) et la paroi (110) ;
enlever le moule d'adaptation (120) du radôme (100).

2. Procédé selon la revendication 1,
dans lequel, avant de disposer la pluralité d'éléments à semi-conducteurs photosensibles plans (140A, 140B) sur la surface externe (124) du moule d'adaptation (120), une géométrie interne de la paroi (110) du radôme (100) est détectée et est divisée en des zones partielles planes et la pluralité d'éléments à semi-conducteurs photosensibles plans (140A, 140B) est présentée conformément à la forme des zones partielles planes.

3. Procédé selon l'une quelconque des revendications précédentes,
dans lequel, avant de disposer la pluralité d'éléments à semi-conducteurs photosensibles plans (140A, 140B) sur la surface externe (124) du moule d'adaptation (120), la surface externe (124) du moule d'adaptation (120) est pourvue d'une couche (130) ayant une face adhésive, afin de fixer la pluralité d'éléments à semi-conducteurs photosensibles plans (140A, 140B) sur une surface adhésive de la couche (130).

4. Procédé selon la revendication 3,
dans lequel la couche (130) est couplée de manière réversible au moule d'adaptation.

5. Procédé selon la revendication 3 ou 4,
dans lequel la couche (130) est fixée par rapport au moule d'adaptation (120) au moyen d'une pression négative.

6. Procédé selon l'une quelconque des revendications 3 à 5,
dans lequel, avant d'enlever le moule d'adaptation (120) du radôme (100), la liaison entre la couche (130) et le moule d'adaptation (120) est interrompue.

7. Procédé selon l'une quelconque des revendications 3 à 6,
dans lequel l'interruption de la liaison entre la couche (130) et le moule d'adaptation (120) consiste à réduire la pression négative.

8. Procédé selon l'une quelconque des revendications 3 à 7,
dans lequel l'interruption de la liaison entre la couche (130) et le moule d'adaptation (120) consiste à appliquer un solvant.

9. Procédé selon l'une quelconque des revendications 3 à 8,
dans lequel l'interruption de la liaison entre la couche (130) et le moule d'adaptation (120) consiste à augmenter la température de la couche (120).

10. Procédé selon l'une quelconque des revendications précédentes,
dans lequel la réalisation de la liaison entre la pluralité d'éléments à semi-conducteurs photosensibles plans (140A, 140B) et le radôme comprend l'étape consistant à :
introduire une masse adhésive (210) dans l'espace intermédiaire (150) entre la surface externe (124) du moule d'adaptation (120) et la surface interne (112) de la paroi (110).
